Europäisches Patentamt

European Patent Office

Office européen des brevets

(11) Publication number: **0 416 780 A2**

# EUROPEAN PATENT APPLICATION

(21) Application number: 90309245.0

(22) Date of filing: 23.08.90

(51) Int. Cl.5: **A63B 37/00**, B29C 65/00, B29D 31/00

(30) Priority: 06.09.89 US 403691

(43) Date of publication of application:
13.03.91 Bulletin 91/11

(84) Designated Contracting States:
BE DE ES FR GB IT SE

(71) Applicant: **ACUSHNET COMPANY**
Belleville Avenue
New Bedford, Massachusetts 02742(US)

(72) Inventor: **Llort, Francisco M.**
Hundred Acres
Dighton, Massachusetts 02715(US)

(74) Representative: **Kirby, Harold Douglas Benson et al**
G.F. Redfern & Company Marlborough Lodge
14 Farncombe Road
Worthing West Sussex BN11 2BT(GB)

(54) **Extruded thread.**

(57) A continuous thread for use in the preparation of a wound golf ball core is made by simultaneous extrusion of three threads which are joined along their long sides during extrusion.

FIG. 3.

## EXTRUDED THREAD

This invention relates to golf balls and, more particularly, to making elastic thread used in forming a wound core of a golf ball.

On today's market there are generally three types of golf balls: one-piece, two-piece and wound. A one-piece ball is a homogeneous mass of material which has been shaped into a golf ball; a two-piece ball is made by molding a cover about a solid core; and a three-piece ball is made by molding a cover around a wound core. A wound core is made by winding elastic thread about a center. The center is either a solid mass or a liquid-filled envelope.

In preparing a wound core, it is important that the thread be rectangular in cross-section. Typically, thread used to prepare a wound core has a cross-sectional dimension of 0.362 inches (0.16 cm) wide by 0.024 inches (0.061 cm) in height.

Conventionally, elastic thread used in making a wound core is prepared by calendering a flat sheet of elastic material which typically measures about 350 yds. (320 m) x 4 ft. (1.22 m) x 3/128 in. (0.06 cm), cutting the flat sheet length-wise three times to form four narrower sheets, splicing a number of the narrower sheets of elastic material into a continuous sheet which measures 2.5 mi. (4 km) x 1 ft. (0.31 m). Finally, this long sheet is slit into the correct thickness for elastic thread for golf balls.

A constant source of vexation to golf ball winding machine operators is the breakage of thread during winding. Typically, about 10 yards (9.1 m) of thread are used to make one wound golf ball core. It is noted that there is a joint in the thread about every 350 yards (320 m). Typically, the break in the thread during winding occurs at these joints or splices during winding. Typically, when the thread breaks, the partially wound core is discarded and no attempt is made to reuse the center. Attempts have been made to extrude one, continuous thread thereby producing a thread without a joint; however, such attempts have yielded thread which is elliptical in cross-section. Such thread is unacceptable.

Applicant has now discovered a method which produces a continuous thread that is suitable for use as a thread for making wound golf ball cores. The thread of the present invention is substantially rectangular in cross-section.

Applicant's invention entails simultaneously extruding three separate, continuously long strands each of which has a circular cross-section measuring about 0.023 inches (0.06 cm) in diameter, joining the strands along the long edges so that a single thread is made which has an overall substantially rectangular cross-sectional area similar to conventional thread. The thread of the present invention is superior to conventional thread since it is without the joint of conventional thread.

The thread of the present invention was found to work in conventional winding machines; thus no conversion of the winding machines was necessary.

These and other aspects of the present invention may be more fully understood by reference to the following illustrations wherein:

Fig. 1 illustrates a cross-section of thread of the prior art;

Fig. 2 illustrates a cross-section of a finished strand made in accordance with the present invention; and

Fig. 3 illustrates three simultaneous strands being extruded.

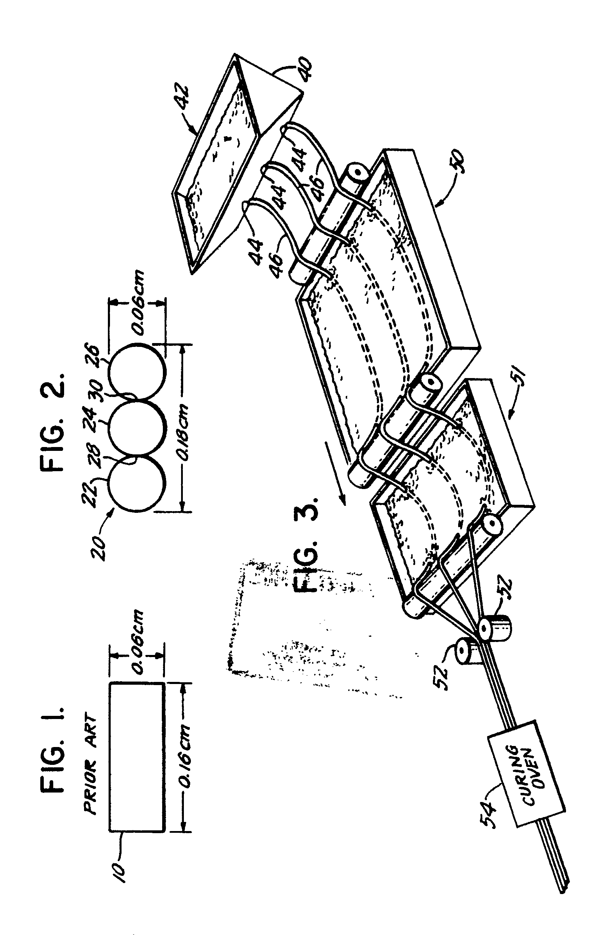

Fig. 1 illustrates a cross-section of a thread 10 of the prior art. As can be seen in Fig. 1, thread 10 has a rectangular cross-section which is 0.06 cm high and 0.16 cm wide.

Fig. 2 illustrates thread 20 made in accordance with the present invention. Thread 20 is made up of individual elastic strands 22, 24 and 26 which are joined respectively at joints 28 and 30. Each individual elastic strand 22, 24 and 26 are identical, round strands having a diameter of about 0.06 cm. When individual strands 22, 24 and 26 are joined they make up single thread 30 which has a width of about 0.18 cm and a height of about 0.06 cm. Thread 20 is substantially rectangular in cross-section.

The thread made in accordance with the present invention is suitably extruded from natural rubber latex and synthetic rubber latex. Natural rubber latex is a water emulsion of natural rubber (cis 1,4 polyisoprene). Synthetic latexes include water emulsions of synthetic rubber such as isoprene rubber and butadiene rubber. Natural rubber latex is preferred.

The thread of the present invention is made using a conventional process which is often employed in making diaper tape. The mixture from which the strands are made is put into a vat which has a plurality of holes along the base. Through each one of the holes an individual strand is drawn and at a distance three strands are brought into close contact along their long edges. Once the three strands have been aligned side by side, they are passed through an oven. At the point where the three threads touch along their long edges a joint is formed. From the oven a thread having a cross-section as shown in Fig. 2 is withdrawn.

Fig. 3 illustrates a conventional process for making diaper tape. Vat 40 contains latex rubber 42. Vat 40 contains three holes 44 through which strands 46 are drawn. A coagulating tank 50 is set a distance from vat 40. Strands 46 pass through coagulating tank 50 and coalesce into a more workable material. Then they pass through tank 51 where the coagulating agent is leached in hot water. After tank 51, strands 46 are drawn together by rollers 52 such that they touch along their edges as shown in Fig. 2. Next the strands move through curing oven 54 in which a joint between each strand is formed.

It will be appreciated by those of skill in the art that possibly two, four or five strands can be used depending on the thickness of the thread and that one vat could make multiple three stranded threads, not just one as is depicted in Fig. 3. However, it is preferred to combine three strands.

It will be understood that the claims are intended to cover all changes and modifications of the preferred embodiments of the invention, chosen herein for the purpose of illustration, which do constitute a departure from the spirit and scope of the invention.

## Claims

1. An elastic thread for winding about a centre in order to make a wound core for a golf ball, the thread comprising a number of simultaneously extruded strands, the strands being of substantially circular cross-section and being arranged in a planar array and joined along respective adjacent sides.

2. An elastic thread according to Claim 1, wherein the number of strands is from two to five.

3. An elastic thread for winding around a center in order to make a wound core of a golf ball comprising three side-by-side, simultaneously extruded strands, each strand having a cross-sectional diameter of about 0.06 cm and the strands being joined along their long sides.

4. method for extruding a continuous elastic thread for use in the preparation of a wound gold ball core comprising:

(a) simultaneously extruding a number of substantially circular-section strands in a side-by-side array, and

(b) joining the strands longitudinally along their respective adjacent sides to produce a continuous thread having cross-sectional dimensions of about 0.06 cm by 0.18 cm.

5. A method according to Claim 1, wherein the number of strands in three and each strand has a cross-sectional diameter of 0.06 cm.

6. A method according to Claim 1, wherein the number of strands is two, four or five.

FIG. 1.
PRIOR ART

FIG. 2.

FIG. 3.

CURING OVEN